## Europäisches Patentamt
## European Patent Office
## Office européen des brevets

(11) Publication number: **0 080 460**
**B1**

# EUROPEAN PATENT SPECIFICATION

(45) Date of publication of patent specification: **30.08.89**

(51) Int. Cl.⁴: **B 64 C 23/06, B 64 C 3/50**

(21) Application number: **81901947.2**

(22) Date of filing: **10.06.81**

(86) International application number:
**PCT/US81/00783**

(87) International publication number:
**WO 82/04426 23.12.82 Gazette 82/30**

(54) **LEADING EDGE VORTEX FLAP FOR WINGS.**

(43) Date of publication of application:
**08.06.83 Bulletin 83/23**

(45) Publication of the grant of the patent:
**30.08.89 Bulletin 89/35**

(84) Designated Contracting States:
**DE FR GB NL SE**

(56) References cited:
**DE-A-3 122 137**
**DE-B-1 119 673**
**US-A-3 090 584**
**US-A-3 471 107**
**US-A-3 831 885**
**US-A-4 267 990**

(73) Proprietor: **THE BOEING COMPANY**
**P.O. Box 3707 Mail Stop 7E-25**
**Seattle Washington 98124-2207 (US)**

(72) Inventor: **MIDDLETON, Wilbur Duff**
**5310 128th Avenue Southeast**
**Bellevue, WA 98006 (US)**
Inventor: **PAULSON, John Allen**
**312 - 160th Place Southeast**
**Bellevue, WA 98008 (US)**

(74) Representative: **Hoijtink, Reinoud**
**OCTROOIBUREAU ARNOLD & SIEDSMA**
**Sweelinckplein 1**
**NL-2517 GK Den Haag (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Supersonic airplanes with highly swept-back, low aspect ratio wings, suffer from high induced drag which is not only due to the consequences of a relatively short wing span, but also, because of the loss of leading edge suction due to airflow separation at the leading edge and over the upper surface of the wing at moderate to high angles-of-attack attitude, such as during takeoff and landing phases of airplane operation. The separation of boundary layer air flow can be alleviated and drag reduced, by utilizing high-lift devices such as wing leading edge flaps. Present known wing leading edge flap devices are generally comprised of hinged panels which are deflected downward, curved panels and boundary layer control means that employ blowing or suction techniques which are available at the cost of weight and complexity.

The present invention operates in a different fashion from present techniques, i.e., those of preventing or delaying boundary layer separation at the leading edge of the wing and thus maintaining attached flow over the remaining upper surface of the wing. (See, e.g. DE—B—1119673 on which the first part of claim 1 in text for the Contracting States Netherlands and Sweden is based on DE—A—3122137 which was filed before and published after the filing date of the present application and on which the first part of claim 1 in text for the Contracting States Germany, Great Britain and France is based).

The present invention actually induces separation of the streamline flow, from the upper surface of a deflected leading edge flap, through the utilization of a vortex generating means, such as: a counter-deflected, double-flap; a leading edge spoiler for a deflected flap; or a jet nozzle means. The proposed solution deflects the fore-flap, of a double leading edge type flap, in a direction opposite to convention, in order to induce a vortex flow for controlling the separation of the streamline flow from the upper surface of the remainder of the wing; and at the same time, suppress lower surface streamline flow separation behind the aft-flap at low angles-of-attack.

An object of the invention, is to realize or increase the beneficial effect of a trapped vortex flow on the forward facing surface of a leading edge flap, by controlling the range of wing angle-of-attack positions that this phenomenen exists.

The above object is achieved by the features of claim 1.

An advantage of the invention, lies in the decreased drag of the wing, through increased effective leading edge suction brought about by low vortex-induced surface pressures acting on the forward facing surface of the flap.

Brief description of the drawings

Figure 1 is a perspective view of a fighter airplane configuration with a low aspect ratio delta or arrow type wing incorporating a leading edge vortex flap of the present invention.

Figure 2 is a cross-sectional view, taken in a chordwise plane, of the wing leading edge shown in Figure 1 and shows a double-flap having a reverse deflected fore-flap segment.

Figure 3 is a view similar to Figure 2 and shows schematically, the airflow over the leading edge of the flap-wing combination with a vortex airflow circulation region on the forward facing surface of the aft-flap segment.

Figure 4 is a front perspective view of the wing leading edge flap of the fighter airplane shown in Figure 1, with the double-flap segments deflected into a downward and forward operative position; and shows how the streamwise airflow separation and vortex circulation would proceed downstream towards the wing tip of the highly swept-back wing leading edge.

Figure 4A is a front perspective view of another embodiment showing a saw-toothed leading edge flap system for producing a spiral vortex in a spanwise outboard direction, similar to that shown in Figure 4.

Figure 5 is a top plan view of the left-half of the low aspect ratio swept wing, supersonic airplane shown in Figure 1.

Figure 6 is a chordwise cross-sectional view of a wing airfoil section taken in the direction 6—6 of Figure 5; and shows a leading edge flap deflected downward at an angle of thirty degrees to the WCP (wing chord plane) and the trailing edge flap deflected downward at an angle of fifteen degrees to the WCP.

Figure 7 is a pressure distribution graph of the airflow over the upper surface of the wing airfoil section with the leading and trailing edge flap deflection arrangement as indicated in Figure 6.

Figure 8 is a chordwise cross-sectional view of another embodiment of a retractable leading edge flap with a hinged forward extended vortex flap which in combination with the main leading edge flap creates a recessed region for better containment of vortex circulation on the forward face of the main flap.

Figure 9 is a chordwise cross-sectional view of another embodiment wherein a leading edge portion of a wing is rotated downward about a spanwise hinge line; and a spoiler and air jet nozzle produce a leading edge vortex flow for the relatively rounded leading edge of the pivoted wing portion.

Figure 10 is a chordwise cross-sectional view of another embodiment wherein an air jet nozzle is used in the leading edge of a downward deflected wing leading edge segment, for triggering the streamwise airflow into a vortex circulation region on the forward facing surface of the segment.

Description of the preferred embodiments

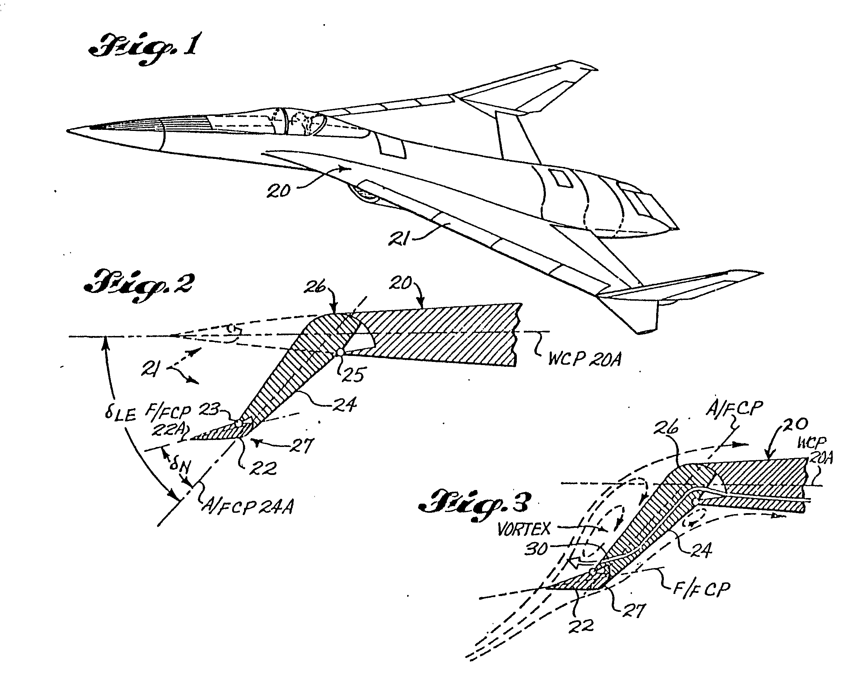

Figure 1 is a perspective view of a supersonic type of fighter airplane having a low aspect ratio, delta or arrow planform wing 20 with a leading edge flap system 21 that incorporates a leading edge vortex control system of the present invention.

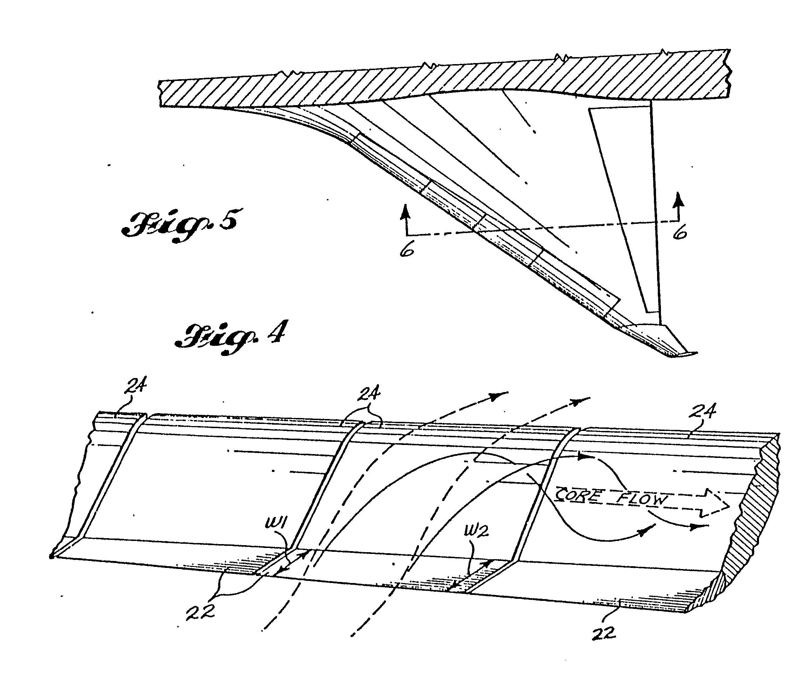

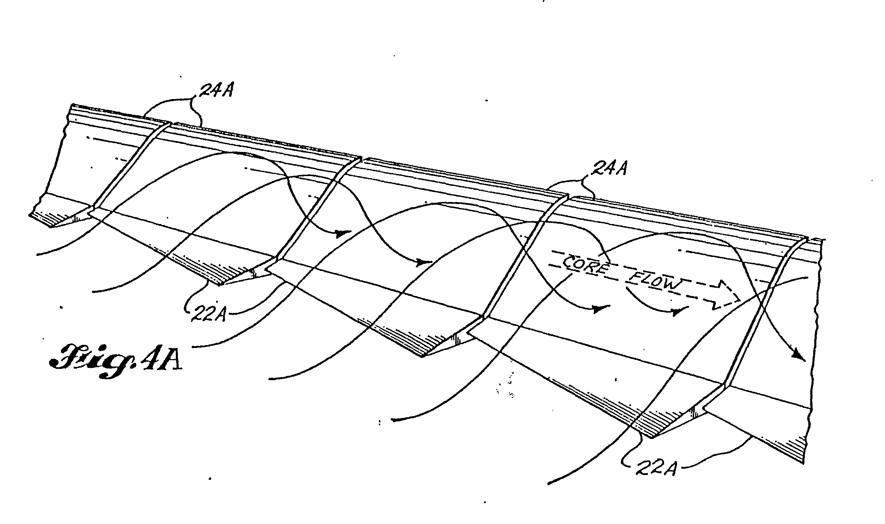

Figures 2 and 3 are cross-sectional views, taken in a streamwise or longitudinal direction, of the leading edge of the wing shown in Figure 1 and show a double-flap 21 comprising: a fore-flap segment 22 hinged at 23 to an aft-flap segment 24 which is hinged at 25 to relatively fixed structure of the wing 20. The fore-flap segment 22 is sized both chordwise and spanwise, and movable relative to and in conjunction with the aft-flap segment 24, for creating a vortex airflow circulation in front of the upper or forward facing surface of the aft-flap segment 24. The fore-flap segment 22 is rotated downward with respect to the wing 20 so that the fore-flap chord·plane 22A forms a lesser deflection angle with the wing chord plane 20A, than that formed by the aft-flap segment with said wing chord plane 20A. This angular relationship of the flap segments 22, 24, relative to the wing, initiates and stabilizes a vortex flow in the recess area. The vortex flow causes a low pressure region to form on the forward facing surface of the aft-flap segment 24, as shown in Figure 3; and this vortex flow functions to induce separation of the streamwise airflow from the upper surface of the double-flap 21 and causes the streamwise airflow to flow around the vortex region and re-attach itself to the upper surface of the wing 20.

By locating a hinge line 25 between the aft-flap 24 and the leading edge of the fixed wing section 20, at the undersurface thereof, an upper surface curvature or knee 26 is formed which will contribute to maintaining the stream-line airflow or boundary layer airflow attached to the upper surface of the fixed wing section. The streamline airflow, around and above the trapped separation flow or vortex core, will then re-attach itself to the upper surface of wing leading edge immediately behind the double-flap 21, at the angles-of-attack associated with the takeoff and landing operation. The vortex-induced pressures on the forward facing flap surface will then act to provide leading edge suction which would otherwise be lost. Also, by incorporating a curvature or knee 27 on the lower aft surface of the fore-flap segment, the streamline flow will more readily remain attached to the undersurface of the fixed wing leading edge. By suppressing separation of the boundary layer flow at the leading edge of the fixed wing undersurface, directly behind the aft-flap segment 24, the regional pressure is raised and drag reduced.

A further embodiment of the invention is shown in Figure 3, which relates to utilizing a series of spanwise jets of high pressure airflow for further stimulating or inducing the formation of a vortex circulation. A jet of air is depicted as exiting from a nozzle 30 positioned slightly above the junction between the fore-flap segment 22 and the aft-flap segment 24. The jet of high pressure airflow aids in shaping and sizing the vortex circulation flow; and provides for a more complete entrenchment of the vortex circulation on the forward facing surface of the aft-flap segments 24.

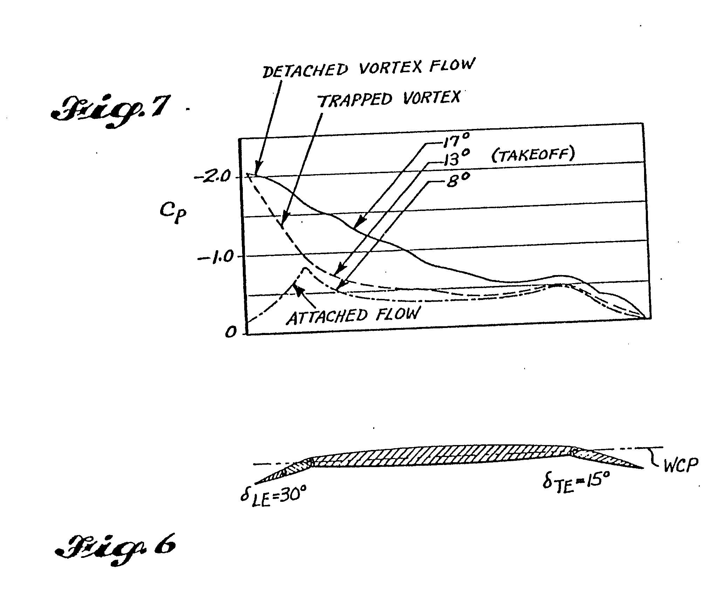

Figure 4 is an enlarged front perspective view of the wing leading edge, double-flap segments in a deflected position, of the fighter airplane shown in Figure 1; wherein the double-flap 21 comprises a fore-flap spanwise segment 22 and an aft-flap spanwise segment 24. The figure shows how a streamwise airflow separation on the forward facing surface of the aft-flap segment 24 and a vortex airflow circulation region, would proceed downstream toward the wing tip, with each spanwise flap segment contributing to the strength of the vortex core flow that is moved down or in essence is pumped down due to the spanwise flow along the highly swept-back leading edge.

For straight or unswept wings, it is necessary to inject high energy air into the leading edge vortex in order to maintain a vortex circulation and also to inject air spanwise down the leading edge to keep the vortex from breaking up and spreading back over the upper surface of the wing as a random separation and causing complete wing upper surface separation. Without air injection, attached streamwise airflow on the wing upper surface would not be possible.

However, with highly swept-back leading edge wings, the streamwise airflow impinging on the leading edge will feed and maintain the circulation of the vortex flow by constantly energizing the coreflow of the vortex; and the spanwise flow induced by the high degree of sweep-back will also feed into the vortex core and cause it to flow spanwise outboard toward the wing tip. As the vortex flow proceeds outboard, it will spiral and grow in size and the force of the vortex will increase in intensity as the distance outboard from the wing root or fuselage of the airplane increases. Therefore, if the circulation of the vortex is to be contained and totally trapped on · the forward facing surface of the aft-flap 24, it is desirable to increase the chord length of both the fore-flap 22 and the aft-flap 24, in a spanwise outboard direction; beginning with a relatively short flap chord length inboard and proceeding to increase the chord length to as much as is feasible toward the tip of the wing. This is contrary to present practice; wherein, the chord length of the leading edge flap is generally decreased outboard on a tapered wing, in proportion to the decrease in wing chord section.

A constant chord length flap is more practical from an ease of manufacturing standpoint and it can also be adapted to produce a beneficial vortex flow on a highly swept-back wing leading edge. However, a certain amount of vortex flow circulation may have to be shed over the upper surface of a wing at spanwise intervals or in a continuous fashion, in order to maintain a major portion of the streamwise airflow attached to the upper surface of the wing airfoil section and this will result in a less efficient airflow pressure pattern over the wing.

The condition of the vortex circulation flow that develops spanwise, can be controlled: by varying the angle-of-deflection, of both the fore-flap 22 and the aft-flap 24; and by changing the chord length, of each of the spanwise flap segments, to increase in a spanwise outboard direction. This control of the spanwise vortex circulation can be done in a continuous fashion, or more practically by using a series of spanwise flap segments; with each flap segment being individually controllable in angle-of-deflection to contain the vortex circulation in front of the forward facing surface of the aft-flap segment 24. Through proper selection of flap chord lengths and flap angle-of-deflection, for the fore-flap and aft-flap segments, a smaller and lighter leading edge flap system for a sharp leading edge airfoil section can be derived that will produce the desired aerodynamic performance and be capable of efficient utilization over a wider range of aircraft angle-of-attack than is possible by present known leading edge flap systems. With a continuous spanwise vortex circulation, most of the loss in leading edge thrust that a sharp leading edge type of wing airfoil section would normally experience, would be avoided; i.e., a wing, with a large radius or rounded leading edge, which was flown so that no flow separated, would be best, or 100% efficient with respect to generating leading edge suction and reducing drag. The continuous spanwise vortex circulation, if achieved, would produce nearly 100% efficiency.

If airflow or pressure sensing systems are employed for detecting and stabilizing an established vortex circulation flow, through a continuous flap angle-of-deflection adjusting procedure while the aircraft is in flight, then this combination would be defined as an aircraft primary control system and as such would make the overall system much more complicated. In general, high-lift devices are principally designed to work at certain predetermined angles-of-attack and for other angles-of-attack they may offer a detriment. Therefore, the vortex generating devices of the herein disclosed embodiments of the invention, are sized and positioned at angles-of-deflection that are determined through wind tunnel and flight tests, to assure that an established vortex circulation will remain close to the flap surface area, for the range of angles-of-attack that the aircraft is to be operated at during takeoff and landing operations.

Aerodynamic wind tunnel tests, of the vortex flow induced leading edge flap of the present invention, have indicated substantially improved airflow characteristics over the upper surface of a wing airfoil section. Various leading edge vortex flap configurations were tested with results that indicated improved airflow, even with a constant chord vortex flap and a constant chord main flap. However, greater aerodynamic improvements were attributable to spanwise tapered flap segments having an increase in chord length in an outboard direction. These spanwise tapered flap segments were more efficient in containing the conically expanding vortex circulation on to the forward facing aft-flap 24 and for aiding the streamwise airflow to re-attach itself onto the upper surface of the wing, immediately adjacent the wing-to-flap juncture or knee 26. Further aerodynamic improvements were noted with an increase in the angle-of-deflection of the aft-flap 24 at spanwise stations proceeding outboard toward the wing tip.

Figure 4A is another embodiment depicting a variation in the leading edge flap system shown in Figure 4; wherein, the individual spanwise segments of the fore-flap 22A are separately tailored and sized with a tapered and increasing chord length, in a spanwise outboard direction. The step-tapered or saw-toothed leading edge, will produce a spiral vortex in a streamwise direction, between the flap segments, which vortex will partially shed back over the upper surface of the wing. Thereby, making room for additionally induced vortex circulation starting at the next adjacent flap segment outboard. The total strength from the forward thrust effect of the low pressure region contained on the upper surface of the forward facing aft-flap 24A, will be reduced; because, each of the spanwise tapered fore-flap segments 22A will have to freshly reinforce the vortex circulation. So, the overall beneficial effect may be reduced from what it could be if the vortex circulation were not partially shed spanwise, but large scale vortex breakdown over the wing upper surface could be postponed to higher angles of attack.

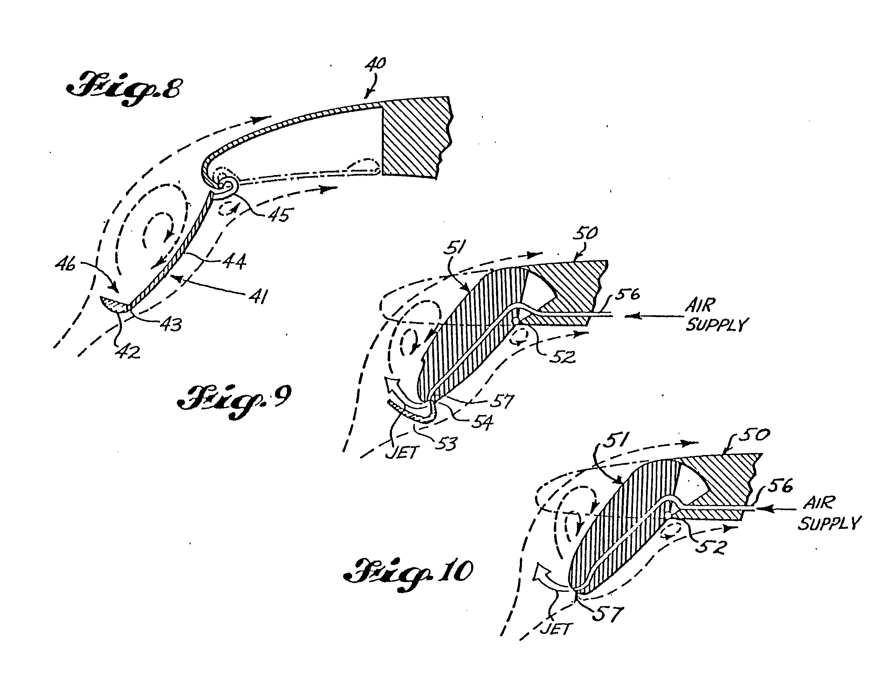

Figure 5 is a top plan view, depicting one-half of the low aspect ratio, swept back-wing, supersonic fighter type airplane shown in Figure 1.

Figure 6 is a cross-sectional view of the wing taken in the direction 6—6 indicated in Figure 5 and shows the leading edge flap deflected downward at an angle of thirty degrees, and the trailing edge flap deflected downward at an angle of fifteen degrees.

Figure 7 is a pressure graph of the airflow over the airfoil section of the wing indicated in Figure 6 and shows the aerodynamic results obtained from wind tunnel tests at the relatively low speed of M=0.2 with the wing at several different angle-of-attack positions. The cross-sectional view of Figure 6 can be considered as being superimposed onto the pressure graph of Figure 7; so, that when the two figures are viewed in combination, they form a clearer understanding of what the different lines of the pressure pattern actually represent with respect to the wing airfoil section.

It was discovered that when the spanwise segments of the leading edge flap are deflected downward at certain angles, that a large negative pressure region formed on the forward facing surface of said flap; and that a reduced pressure region acted in a thrust direction which resulted in reduced drag. This discovery formed the basis for believing that a vortex airflow circulation regions does lay or can lay along the forward facing surface of a downward deflected flap segment: and that this circulating vortex can, to some extent, simulate a large rounded leading edge for the wing airfoil section. Also, the leading edge suction characteristics normally attributable to a large rounded leading edge, appears to have been replaced by the vortex flow and therefore the drag characteristics are kept low.

Referring to the plotted pressure pattucn, shown in Figure 7, for the wing at an angle-of-attack of approximately eight degrees, it will be noted that the streamwise airflow remains substantially attached to the upper surface contour of the leading edge flap 24 and the upper surface of the wing airfoil section; and this attached airflow prevails with the fore-flap segment 22 remaining in chordwise alignment with the aft-flap 24, as shown in Figure 6. The sharp rising peak represents the airflow pressure at the knee 26 between the leading edge flap and the wing.

Referring to the plotted pressure pattern for the wing at an angle-of-attack of thirteen degrees and with the leading edge flap 21 deflected downward at an angle of 30 degrees (as shown in Figure 6), test results show that a very low pressure region, generally associated with a vortex airflow circulation, develops on the forward facing surface of the leading edge flap; and that this vortex functions to induce initial separation of the oncoming streamwise airflow at the sharp leading edge of the flap as indicated by the peak negative pressure in Figure 7. The sharp negative slope of the plotted pressure line indicates that this vortex airflow circulation has established itself on the forward facing surface of the leading edge flap; even though, the fore-flap 22 is not deflected upward with respect to the aft-flap 24; but, as shown in Figure 6 said flap segments are in chordwise alignment. Further, the plotted pressure pattern indicates a trapped vortex airflow circulation region, because the pressure at the wing-flap juncture or knee 26 almost returns to what it was when the streamline airflow remained attached as depicted by the position of the pressure line for the wing at eight degrees angle-of-attack. When a vortex forms, the induced circulation effect of the vortex, further reduces the pressure inside the core of the vortex; and in so doing, causes the external streamwise airflow to reattach itself to the upper surface of the wing immediately adjacent to the wing-flap juncture or knee 26 and remain attached over the remaining wing surface.

Referring to the plotted pressure pattern for the wing at an angle-of-attack of seventeen degrees, the pressure pattern past the wing-flap juncture or knee 26 indicates that the circulation of the vortex has now spilled over onto the upper surface of the wing, as opposed to being contained on the forward facing surface of the deflected flap, and a relatively large negative pressure region has been created over the upper surface of the wing.

A comparison of the plotted pressure patterns for the wing at eight degrees and thirteen degrees, indicates that a higher pressure, in a positive sense, is created in front of the flap when the wing is at eight degrees, than when it is increased to a takeoff attitude of approximately thirteen degrees. At thirteen degrees, the pressure is low over the upper surface of the flap which indicates that a forward thrust effect takes place and that the drag is significantly reduced. When the overall force characteristics of the wing are measured in wind tunnel tests, this improved drag characteristic at thirteen degrees is evident and is a prime element in the improved performance for this particular wing airfoil section. However, when the wing is at the higher angle-of-attack of seventeen degrees, the beneficial effect of the low pressure region created by the vortex, is destroyed; because, the low pressure spills over the wing-flap juncture or knee 26 and onto the upper surface of the wing. This increase in area of the low pressure region causes separation of the streamwise airflow from the wing upper surface and results in increased drag. Therefore, it was determined that only by maintaining a circulating vortex on the forward facing surface of the deflected flap and preventing it from spilling over onto the upper surface of the wing, could the wing drag characteristics be significantly improved.

Although the phenomenon of the vortex circulation exists on the flap at a wing angle-of-attack of thirteen degrees without the fore-flap segment 22 being deflected upward, it is the object of this invention to increase the effectiveness of the trapped vortex by controlling at what angle-of-attack the vortex will form as well as the range of angles-of-attack that the vortex will remain trapped on the forward facing surface of the flap. With the vortex flap deflected upward relative to the main flap, the beneficial effect of a large negative pressure region on the forward facing flap surface as indicated in Figure 7 by the wing angle-of-attack of thirteen degrees, can also be created at the lower wing angle-of-attack of eight degrees, i.e., by the proper utilization of the vortex flap, it is possible to increase the range of wing angles-of-attack over which the beneficial effect of a trapped vortex airflow circulation region can exist.

Although the various embodiments of this invention are particularly adaptable to highly swept-back leading edge wings where inherently there is a substantial spanwise airflow generated along the leading edge, it is contemplated that this invention could also be applicable to a wing having a less swept-back leading edge; and can even be adapted to a straight leading edge wing, provided that spanwise blowing is introduced into the vortex circulation core, so that the vortex does not spill over the forward facing surface of the flap segment and onto the upper surface of the wing.

Referring to Figures 3, 4, 4A and assuming that the flap segments form an unswept leading edge of a wing, for each of the spanwise flap segments, a jet nozzle or a series of jet nozzles should be located so as to direct a jet of pressurized fluid at the core of the vortex. As shown in the end view of Figure 3, the core of the vortex is approximately one-third of the distance up from the intersection of the fore-flap 22 with the aft-flap 24, on the forward facing surface of the aft-flap 24.

Figure 8 shows another embodiment of the invention applicable to a wing 40 having a relatively round leading edge, as opposed to the very sharp leading edge shown in Figures 1—6, and with a retractable leading edge flap 41 shown hinged at 45 to wing structure and extended from the lower surface thereof to a forward and downward operative position. The flap 41 comprises panel 44 and a bullnose member 42 hinged at 43 thereto. In the extended position shown, the flap panel 44 is shown as a flexible panel with reverse curvature and bullnose 42 is rotated additionally so that the combination appears as a reversed variable camber type flap. This flap relationship creates a recessed area or trap 46 that contains the vortex circulation better than if a flat surface Kruger type flap were used. If a vortex airflow circulation region can be established and maintained, in the same general location forward of the wing leading edge as shown in Figure 3, the vortex will cause an acceleration of the freestream airflow as it passes up over the leading edge of the relatively fixed wing section, then the possibility of airflow separation beyond the flap would be suppressed.

Figure 9 shows another embodiment wherein a wing 50 has a rounded leading edge; and a forward section of the wing is rotated downward about a hinge 52, to form a drooped wing leading edge section 51. The drooped wing section 51, having a rounded leading edge, is desensitized to the formation of a vortex; and if a vortex should happen to form thereon, it would not be stable, nor would it be maintained on the forward facing surface thereof.

A relatively large rounded leading edge, on a conventional type of retractable flap which is generally stowed in the undersurface of the wing leading edge, will also have an inherent tendency, when the flap is in an operative forwardly extended position, to keep the streamwise airflow attached to the upper surface of said flap. Therefore, in the Figure 9 embodiment, a spoiler 53 is hinged at 54 to the leading edge of the drooped wing section 51 and is employed for tripping the streamwise airflow and causing a separation thereof. The spoiler 53 also functions as a triggering device for producing a circulating vortex flow on the forward facing surface of the drooped wing section 51, which vortex flow will cause the streamwise airflow to separate in the manner as previously described.

In addition, in the Figure 9 embodiment there is intended to be a series of nozzles 57 arranged in a spanwise direction (not shown) and said nozzles are to be uncovered with the extension of the spoiler 53 into the streamwise airflow. Also, a jet of pressurized fluid is to be exhausted from the nozzles 57, which are located at the hinged juncture 54 of the spoiler to flap-segment, to aid in producing a vortex circulation. The spoiler 53 is tailored and sized with a spanwise tapering, chord length (not shown) for a more efficient control over the circulating vortex flow on the forward facing surface of the flap segment 51, in a manner similar to that previously described and shown in Figures 4 and 4A with respect to the fore-flap segments 22 and 22A respectively.

Figure 10 shows another embodiment wherein a vortex generating air-jet is used as a trigger to trip the streamwise airflow over a rounded leading edge of a drooped wing section and cause a separation of the streamwise airflow over the forward facing surface thereof in a manner as previously described with respect to Figure 9.

While the invention has been disclosed with reference to preferred embodiments, it is to be understood that those modifications and changes which become obvious to a person skilled in the art to which this invention pertains, as a result of the teachings hereof, are considered to be encompassed by the following claims.

## Claims for the Contracting States: DE, GB, FR

1. Apparatus (5) for streamwise airflow control over the upper surface of an airfoil (20) said airfoil having a drooped leading edge segment, said apparatus comprising means (22) mounted forward on said drooped leading edge segment (24) for generating a vortex airflow circulation on the forward facing surface of said drooped leading edge segment (24) to control both the separation of the streamwise airflow and its reattachment to the upper surface of the airfoil (20) downstream of said drooped leading edge segment characterized by a spanwise series of leading edge segments; each of said spanwise segments comprising a fore-flap segment (22) and an aft-flap segment (24); each of said aft-flap segments (24) having a chordplane (24a) and being positioned at a forward and downward angle-of-deflection relative to said airfoil chordplane (20a); and each of said fore-flap segments (22) being positioned at a forward and upward angle-of-deflection relative to the chordplane of each of said aft-flap segments (24), for creating a vortex airflow circulation along the forward facing surface of said downward deflected aft-flap segments and for inducing separation of the streamwise airflow in front of said aft-flap segments (24); said swept-back wing leading edge producing a spanwise flow of said vortex airflow circulation toward the wing tip.

2. Apparatus according to claim 1 characterized by said flap segments being positioned at an increasing angle-of-deflection, relative to said wing chordplane, at spanwise stations proceeding outboard toward the wing tip for confining said vortex airflow circulation, in a continuous spanwise fashion, to the forward facing surface area of said downward deflected flap.

3. Apparatus according to claim 1 or 2 characterized by said flap having an increase in chord length in a spanwise outboard direction from said root section toward said tip section, for containing a conically expanding spanwise vortex on the forward facing surface of said downward deflected aft-flap segments and thereby controlling re-attachment of said separated streamline airflow to the upper surface of said wing, downstream chordwise of said aft-flap segments.

## CLaims for Contracting States: NL, SE

1. Apparatus (5) for streamwise airflow control over the upper surface of an airfoil (20) said airfoil having a drooped leading edge segment, characterized by means (22) mounted forward on said drooped leading edge segment (24) for generating a vortex airflow circulation on the forward facing surface of said drooped leading edge segment (24) to control both the separation of the streamwise airflow and its re-attachment to the upper surface of the airfoil (20) downstream of said drooped leading edge segment.

2. Apparatus according to claim 1 for streamwise airflow control over the upper surface of a wing (20) having a swept-back leading edge and said wing having a chordplane (20a) characterized by a spanwise series of leading edge segments; each of said spanwise segments comprising a fore-flap segment (22) and an aft-flap segment (24); each of said aftflap segments (24) having a chordplane (24a) and being positioned at a forward and downward angle-of-deflection relative to said airfoil chordplane (20a); and each of said fore-flap segments (22) being positioned at a forward and upward angle-of-deflection relative to the chordplane of each of said aft-flap segments (24), for creating a vortex airflow circulation along the forward facing surface of said downward deflected aft-flap segments and for inducing separation of the streamwise airflow in front of said aft-flap segments (24); said swept-back wing leading edge producing a spanwise flow of said vortex airflow circulation toward the wing tip; said aft-flap segments having an increase in chord length in a spanwise outboard direction for containing a conically expanding spanwise vortex on the forward facing surface of said downward deflected aft-flap segments and thereby controlling re-attachment of said separated streamline airflow to the upper surface of said wing, downstream chordwise of said aft-flap segments.

3. Apparatus according to claim 1 for streamline airflow control over the upper surface of a wing (20) having a chordplane (20a) said wing having a spanwise leading edge flap positioned at a forward and downward angle-of-deflection relative to said wing chordplane, characterized by said flap being positioned at an increasing angle-of-deflection, relative to said wing chordplane, at spanwise stations proceeding outboard toward the wing tip for confining said vortex airflow circulation, in a continuous spanwise fashion, to the forward facing surface area of said downward deflected flap.

4. Apparatus according to claim 3 characterized by said flap having an increase in chord length in a spanwise outboard direction from said root section toward said tip section (Fig. 4a).

## Patentansprüche für die Vertragsstaaten: DE, GB, FR

1. Einrichtung (5) für die stromweise Luftströmungssteuerung über die obere Oberfläche eines Flügels (20), wobei der Flügel ein abfallendes Vorderkantensegment hat, wobei diese Einrichtung eine vorwärts auf dem abfallenden Vorderkantensegment (24) angebrachte Einrichtung (22) zum Erzeugen einer Wirbelluftströmungszirkulation auf der nach vorwärts gerichteten Oberfläche des abfallenden Vorderkantensegments (24) zum Steuern von sowohl der Abtrennung der stromweisen Luftströmung als auch ihrer Wiederanbringung an der oberen Oberfläche des Flügels (20) stromabwärts von dem abfallenden Vorderkantensegment umfaßt, gekennzeichnet durch eine spannweitenweise Reihe von Vorderkantensegmenten; wobei jedes der spannweitenweisen Segmente ein Vorderklappensegment (22) und ein Hinterklappensegment (24) umfaßt; wobei jedes der Hinterklappensegmente (24) eine Sehenenebene (24a) hat und in einem Vorwärts- und Abwärtsauslenkungswinkel relativ zu der Flügelsehnenebene (20a) positioniert ist; und wobei jedes der Vorderklappensegmente (22) in einem Vorwärts- und Aufwärtsauslenkungswinkel relativ zu der Sehnenebene von jedem der Hinterklappensegmente (24) positioniert ist, und zwar zum Erzeugen einer Wirbelluftströmungszirkulation entlang der nach vorwärts gewandten Oberfläche der nach abwärts ausgelenkten Hinterklappensegmente und zum Induzieren einer Abtrennung der stromweisen Luftströmung vor den Hinterklappensegmenten (24); wobei die gepfeilte Flügelvorderkante eine spannweitenweise Strömung der Wirbelluftströmungszirkulation nach der Flügelspitze zu erzeugt.

2. Einrichtung nach Anspruch 1, dadurch gekennzeichnet, daß die Klappensegmente in einem zunehmenden Auslenkungswinkel relativ zu der Flügelsehnenebene in spannweitenweisen Stationen fortschreitend außenbords nach der Flügelspitze zu positioniert sind, und zwar zum Beschränken der Wirbelluftströmungszirkulation in einer kontinuierlichen spannweitenweisen Weise zu dem nach vorwärts gerichteten Oberflächenbereich der abwärts ausgelenkten Klappe.

3. Einrichtung nach Anspruch 1 oder 2, dadurch gekennzeichnet, daß die Klappe eine Zunahme in der Sehnenlänge in einer spannweitenweisen Außenbordrichtung von dem Wurzelabschnitt nach dem Spitzenabschnitt zu hat, und zwar zum Enthalten eines konisch expandierenden spannweitenweisen Wirbels auf der nach vorwärts gerichteten Oberfläche der nach abwärts ausgelenkten Hinterklappensegmente und dadurch zum Steuern der Wiederanbringung der abgetrennten Stromlinienluftströmung an der oberen Oberfläche des Flügels, stromabwärts sehnenweise der Hinterklappensegmente.

**Patentansprüche für die Vertragsstaaten: NL, SE**

1. Einrichtung (5) für die stromweise Luftströmungssteuerung über die obere Oberfläche eines Flügels (20), wobei der Flügel ein abfallendes Vorderkantensegment hat, gekennzeichnet durch eine vorwärts auf dem abfallenden Vorderkantensegment (24) angebrachte Einrichtung (22) zum Erzeugen einer Wirbelluftströmungszirkulation auf der nach vorwärts gerichteten Oberfläche des abfallenden Vorderkantensegments (24) zum Steuern von sowohl der Abtrennung der stromweisen Luftströmung als auch ihrer Wiederanbringung an der oberen Oberfläche des Flügels (20) stromabwärts von dem abfallenden Vorderkantensegment umfasst.

2. Einrichtung nach Anspruch 1, für die stromweise Luftströmungssteuerung über die obere Oberfläche eines Flügels (20), wobei der Flügel eine gepfeilte Flügelvorderkante und eine Sehnenebene (20a) hat, gekennzeichnet durch eine spannweitenweise Reihe von Vorderkantensegmenten, wobei jedes der spannweitenweise Segmenten ein Vorderklappensegment (22) und ein Hinterklappensegment (24) umfasst; wobei jedes der Hinterklappensegmenten (24) eine Sehnenebene (24a) hat und in einem Vorwärts- und Abwärts; auslenkungswinkel relativ zu der Flügelsehnenebene (20a) positioniert ist; und wobei jedes der Vorderklappensegmente (22) in einem Vorwärts- und Aufwärtsauslenkungswinkel relativ zu der Sehnenebene von jedem der Hinterklappensegmente (24) positioniert ist, und zwar zum Erzeugen einer Wirbelluftströmungszirkulation entlang der nach vorwärts gewandten Oberfläche der nach abwärts ausgelenkten Hinterklappensegmente und zum Induzieren einer Abtrennung der stromweisen Luftströmung vor der Hinterklappensegmenten (24); wobei die gepfeilte Flügelvorderkanten eine spannweitenweise Strömung der Wirbelluftströmungszirkulation nach der Flügelspitze zu erzeugt; wobei dem Hinterklappensegment eine Zunahme in in der Sehnenlänge in einer spannweitenweisen Aussenbordrichtung hat, und zwar zum Enthalten eines konisch expandierenden spannweitenweisen Wirbels auf der nach vorwärts gerichteten Oberfläche der nach abwärts ausgelenkten Hinterklappensegmente und dadurch zum Steuern der Wiederanbringung der abgetrennten Stromlinienluftströmung an der oberen Oberfläche des Flügels, stromabwärts sehnenweise der Hinterklappensegmente.

3. Einrichtung nach Anspruch 1, für die stromweise Luftströmungssteuerung über die obere Oberfläche eines Flügels (20), wobei der Flügel eine Sehnenebene (20a) hat und eine spannweitenweise Vorderkantenklappe, die in einem Vorwärts- und Abwärtsauslenkungswinkel relativ zu der Sehnenebene des Flügels positioniert ist, dadurch gekennzeichnet, dass die Klappensegmente in einem zunehmenden Auslenkungswinkel relativ zu der Flügelsehnenebene in spannweitenweisen Stationen fortschreitend aussenbords nach der Flügelspitze zu positioniert sind, und zwar zum Beschränken der Wirbelluftströmungszirkulation in einer kontinuierlichen spannweitenweisen Weise zu dem nach vorwärts gerichteten Oberflächenbereich der abwärts ausgelenkten Klappe.

4. Einrichtung nach Anspruch 3, dadurch gekennzeichnet, dass die Klappe eine Zunahme in der Sehnenlänge in einer spannweitenweisen Aussenbordrichtung von dem Wurzelabschnitt nach dem Spitzenabschnitt zu hat (Fig. 4a).

**Revendications pour les Etats Contractants: DE, FR, GB**

1. Appareil (5) destiné au réglage d'un écoulement d'air analogue à une veine à la surface supérieure d'un profil aérodynamique (20), le profil aérodynamique ayant un segment penché de bord d'attaque, l'appareil comprenant un dispositif (22) monté en avant du segment de bord d'attaque penché (24) afin qu'il crée une circulation à écoulement tourbillonnaire sur la surface du segment penché (24) qui est tournée vers l'avant de manière que la séparation de l'écoulement analogue à une veine et sa fixation à la surface supérieure du profil aérodynamique (20) en aval du segment penché soient maîtrisées, caractérisé par une série de segments de bord d'attaque disposés suivant l'envergure, chacun des segments disposées suivant l'envergure comprenant un segment avant (22) et un segment arrière (24) de volet, chacun des segments arrière (24) ayant un plan (24A) contenant les cordes qui fait un angle de déviation vers l'avant et vers le bas par rapport au plan des cordes du profil aérodynamique (20A), chacun des segments avant (22) étant disposé avec un angle de déviation vers l'avant et vers le haut par rapport au plan des cordes de chacun des segments arrière (24), afin qu'une circulation due à l'écoulement d'air tourbillonnaire soit formée le long de la surface des segments arrière déviés vers le bas qui est tournée vers l'avant et qu'une séparation de l'écoulement d'air analogue à une veine soit induite en avant des segments arrière (24), le bord d'attaque de l'aile à flèche provoquant un écoulement de la circulation due à l'écoulement tourbillonnaire dans la direction de l'envergure, vers l'extrémité de l'aile.

2. Appareil selon la revendication 1, caractérisé par des segments de volet disposés avec un angle croissant de déviation par rapport au plan des cordes de l'aile, à des emplacements progressant vers l'extérieur, vers l'extrémité de l'aile dans la direction de l'envergure, afin que la circulation due à l'écoulement d'air tourbillonnaire soit confinée, d'une manière continue dans la direction de l'envergure, à la partie de la surface du volet dévié vers le bas qui est tournée vers l'avant.

3. Appareil selon la revendication 1 ou 2, caractérisé en ce que le volet a une longueur de corde qui augmente vers l'extérieur dans la direction de l'envergure depuis le tronçon de pied et vers le tronçon d'extrémité, afin qu'un tourbillon grandissant coniquement dans la direction de l'envergure soit confiné à la surface des segments arrière de volet déviés vers le bas qui est tournée vers l'avant, si bien que le recollement de l'écoulement d'air laminaire séparé à la surface supérieure de l'aile est assuré, en aval dans la direction de la corde des segments arrière.

**Revendications pour les Etats Contractants: NL, SE**

1. Appareil (5) destiné au réglage d'un écoulement d'air analogue à une veine à la surface supérieure d'un profil aérodynamique (20), le profil aérodynamique ayant un segment penché de bord d'attaque, caractérisé par un dispositif (22) monté en avant du segment de bord d'attaque penché (24) afin qu'il crée une circulation à écoulement tourbillonnaire sur la surface du segment penché (24) qui est tournée vers l'avant de manière que la séparation de l'écoulement analogue à une veine et sa fixation à la surface supérieure du profil aérodynamique (20) en aval du segment penché soient maîtrisées.

2. Appareil selon la revendication 1, destiné au réglage d'un écoulement d'air analoque à une veine à la surface supérieur d'un aile (20), l'aile auant un bord d'attaque à flèche et un plan des cordes (20a), caractérisé par une série de segment de bord d'attaque disposés suivant l'envergure, chacun des segments disposées suivant l'envergure comprenant un segment avant (22) et un segment arrière (24) de volet, chacun des segments arrière (24) ayant un plan (24A) contenant les cordes qui fait un angle de déviation vers l'avant et vers le bas par rapport au plan des cordes du profil aérodynamique (20A), chacun des segments avant (22) étant disposé avec un angle de déviation vers l'avant et vers le haut par rapport au plan des cordes de chacun des segments arrière (24), afin qu'une circulation due à l'écoulement d'air tourbillonnaire soit formée le long de la surface des segments arrière déviés vers le bas qui est tournée vers l'avant et qu'une séparation de l'ecoulement d'air analogue à une veine soit induite en avant des segments arrière (24), le bord d'attaque de l'aile à flèche provoquant un écoulement de la circulation due à l'ecoulement tourbillonnaire dans la direction de l'envergure, vers l'extrémité de l'aile; le segment arrière de volet ayant une longueuer de corde qui augmente vers l'extérieur dans la direction de l'envergure afin qu'un tourbillon grandissant coniquement dans la direction de l'envergure soit confiné à la surface des segments arrière de volet déviés vers le bas qui est tournée vers l'avant, si bien que le recollement de l'écoulement d'air laminaire séparé à la surface supérieure de l'aile est assuré, en aval dans la direction de la corde des segments arrière.

3. Appareil selon la revendication 1, destiné au réglage d'un écoulement d'air analogue à une veine à la surface superieur d'un aile (20), l'aile ayant un plan des cordes (20a) et un volet avant étant disposé avec un angle de déviation vers l'avant et vers le haut par rapport au plan des cordes de l'aile, caractérisé par des segments de volet disposés avec un angle croisant de déviation par rapport au plan des cordes de l'aile, à des emplacements progressant vers l'extérieur, vers l'extrémité de l'aile dans la direction de l'envergure, afin que la circulation due à l'ecoulement d'air tourbillonnaire soit confinée, d'une manière continue dans la direction de l'envergure, à la partie de la surface du volet dévié vers le bas qui est tournée vers l'avant.

4. Appareil selon la revendication 3, caractérisé en ce que le volet a une langueur de corde qui augmente vers l'exterieur dans la direction de l'envergure depuis le tronçon de pied et vers le tronçon d'extrémité (Fig. 4a).

Fig. 1

Fig. 2

Fig. 3

*Fig. 5*

*Fig. 4*

EP 0 080 460 B1

Fig. 4A

*Fig. 7*

DETACHED VORTEX FLOW

TRAPPED VORTEX

17°
13° (TAKEOFF)
8°

$C_P$

−2.0

−1.0

0

ATTACHED FLOW

$\delta_{LE} = 30°$   $\delta_{TE} = 15°$   WCP

*Fig. 6*

Fig. 8

Fig. 9

Fig. 10